# EUROPEAN PATENT APPLICATION

(11) **EP 4 760 058 A1**
(43) Date of publication of application: **17.06.2026**
(21) Application number: 25222570.1
(22) Date of filing: 11.12.2025
(51) Int. Cl.: F01D 17/10, F01D 17/14, F01D 25/00, F01D 25/22

(54) **SYSTEM AND METHOD FOR REDUCING WEAR IN AN ACCESSORY GEARBOX DURING A WASH EVENT OF A GAS TURBINE ENGINE**

(30) Priority: 13.12.2024 US 202418980231
(71) Applicant: General Electric Company, Cincinnati, Ohio 45215 (US)
(72) Inventor: G., Rajanikanth, 560066 Bengaluru (IN); NAYANI, Manoj, 560066 Bengaluru (IN); ZIMMERER, Matthew Robert, Evendale, 45215 (US)
(74) Representative: Openshaw & Co.

(57) **Abstract**

A system for reducing wear during a wash of a gas turbine engine (10) is provided. The system includes an accessory gearbox (45), a transfer gearbox (46) drivingly coupled to the accessory gearbox (45), and a lubrication system (100) fluidly coupled to the accessory gearbox (45) and the transfer gearbox (46). The lubrication system (100) includes a supply circuit (106) for supplying lubricant (104) from a lubricant reservoir (102) to the accessory gearbox (45) and the transfer gearbox (46). The lubrication system further comprises a return circuit (108) for returning the lubricant (104) from the accessory gearbox (45) and the transfer gearbox (46) to the lubricant reservoir (102). The lubrication system further comprises a wash bypass line (168) extending from the return circuit (108) to the supply circuit (106).

## Description

### CROSS-REFERENCE TO RELATED APPLIATION(S)

This application claims priority to U.S. Utility Application No. 18/980,231 filed December 13, 2024, which is incorporated herein by reference.

### FIELD

The present disclosure relates to a system and method for preventing wear in one or more gearboxes of a gas turbine engine during a wash event.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustor section, a turbine section, and an exhaust section. In operation, air is provided from the fan to an inlet of the compressor section where one or more axial compressors progressively compress the air until it reaches the combustor section. Fuel is mixed with the compressed air and burned within the combustor section to provide combustion gases. The combustion gases are routed from the combustor section to the turbine section. The flow of combustion gasses through the turbine section drives the turbine section and is then routed through the exhaust section, e.g., to atmosphere.

During operation, a substantial amount of air is ingested by such gas turbine engines. However, such air may contain foreign particles. A majority of the foreign particles will follow a gas path through the engine and exit with the exhaust gases. However, at least certain of these particles may stick to certain components within the gas turbine engine's gas path, potentially changing aerodynamic and/or thermal properties of the engine and reducing engine performance.

In order to remove such foreign particles from within the gas path of the gas turbine engine, a cleaning operation can be performed by directing water or other fluids towards an inlet of the gas turbine engine, while the core engine is cranked using, e.g., a starter motor. However, such cleaning operations are often not tailored to the type of cleaning actually needed in a particular portion of the engine. For example, depending on the prior operating conditions of the gas turbine engine, a quick and simple water wash may be needed. In other situations, a long wash cycle with a wash foam having particular foam characteristics may be needed to properly clean the engine and return it to peak efficiency.

In all the above engine wash situations, the engine is offline for the duration of the wash. As a consequence, the lubricant does not circulate through the various gearboxes of the gas turbine engine. This can result in excessive gear scuffing and gearbox wear. Accordingly, an improved lubrication system and method for reducing or preventing wear during a wash of a gas turbine engine is desired and would be beneficial in the art.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 illustrates a cross-sectional view of a gas turbine engine in accordance with an exemplary aspect of the present disclosure.
FIG. 2 is a schematic diagram of a system for reducing or preventing wear during a wash cycle of a gas turbine engine in accordance with embodiments of the present disclosure.
FIG. 3 illustrates a cross-sectional view of a portion of a nacelle of a gas turbine engine in accordance with exemplary aspects of the present disclosure.
FIG. 4 illustrates a flow chart of a method for reducing or preventing wear (e.g., in one or more gearboxes) during a wash of a gas turbine engine in accordance with embodiments of the present disclosure.
FIG. 5 provides a block diagram of a computing system for implementing one or more aspects of the present disclosure according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the term "line" may refer to fluid conveying component, such as a tube, pipe, hose, or other fluid conveying and/or carrying conduit.

The present disclosure is generally related to a system and method for reducing or preventing wear in one or more gearboxes of a gas turbine engine during a wash event. During the wash of the gas turbine engine, the shafts or spools of the gas turbine engine may be rotated at a slow speed (e.g., 50-150 RPM for several hours) by connecting an electric machine (e.g., a starter motor) to the accessory gearbox and/or the transfer gearbox while cleaning fluid is forced through the gas turbine engine (e.g., through the rotor blades, stator vanes, and various other components). Since the engine is offline during wash, the lubricant does not circulate as it would during normal operation of the gas turbine engine through the accessory gearbox and the transfer gearbox, which can result in gear scuffing and/or wear during the wash of the engine. For example, during normal operation, one or more supply pumps and one or more return pumps, which are drivingly connected to the accessory gearbox (and/or the transfer gearbox), may circulate lubricant throughout a lubrication system that is fluidly connected to the gearboxes. However, during the wash event, the supply pumps and/or return pumps may be operated at a slower speed than traditional operation, such that lubricant does not circulate at the same rate or in the same amount as it would during normal operation to the accessory gearbox and/or the transfer gearbox. That is, because the gearboxes are driven at a lower speed during the wash event (which can last several hours) to drive the shaft(s) of the gas turbine at a slow speed, thus driving the oil supply/return pumps at a slow speed, wear or gear scuffing can result in the gearboxes due to insufficient lubricant being provided. It will be understood by one skilled in the art that while the term "wash" is often used to describe a wet process involving a liquid or foam washing medium, in the context of the present invention it is intended to encompass all cleaning processes which require rotation of the gas turbine engine during the cleaning process including, without limitation, water wash, foam wash, abrasive media cleaning, dry ice (carbon dioxide) blasting, frozen liquid media cleaning exhibiting a phase change during the wash, laser ablative cleaning and the like.

The system includes an improved lubrication system that reduces or prevents gear scuffing and/or wear within the accessory gearbox and the transfer gearbox by re-routing lubricant to the gearboxes during the wash. Specifically, the lubrication system includes a lubricant reservoir, a supply circuit that provides lubricant from the lubricant reservoir to the accessory gearbox and the transfer gearbox, and a return circuit that returns the lubricant from the accessory gearbox and the transfer gearbox to the lubricant reservoir. The system may include one or more valves actuatable between a closed position and an open position positioned on the return circuit.

During a wash event or cycle of the gas turbine engine, the one or more valves may be actuated to the closed position, thereby preventing lubricant from egressing from the accessory gearbox and/or the transfer gearbox. Additionally, the lubrication system may include a wash bypass line that provides additional lubricant from the supply circuit to the accessory gearbox and the transfer gearbox to limit (e.g., reduce or prevent) wear of the components in the gearboxes. Once the wash is complete, the one or more valves may be opened, allowing the additional lubricant to egress from the accessory gearbox and the transfer gearbox. The improved lubrication system advantageously reduces the equipment cost because it allows for the gas turbine engine's on-board lubrication system to be utilized for lubricating the gearboxes during the wash event without the need for any additional lubrication systems (e.g., lubrication systems on the wash system or cart or other external oil rig systems). The system also preserves the life of the gearboxes by reducing or preventing wear during the wash event, which can last several hours.

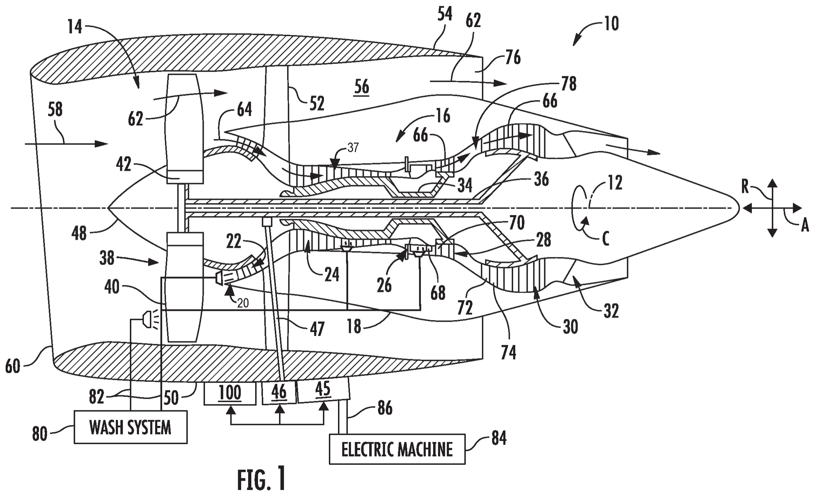

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. The compressor section, combustion section 26, and turbine section together define at least in part a core air flowpath of the turbofan engine 10. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a fan 38 having a plurality of fan blades 40 coupled to a disk 42 in a spaced apart manner. As is depicted, the fan blades 40 extend outwardly from disk 42 generally along the radial direction R. Each fan blade 40 is rotatable relative to the disk 42 about a pitch axis by virtue of the fan blades 40 being operatively coupled to a suitable pitch change mechanism configured to collectively vary the pitch of the fan blades 40, e.g., in unison. The disk 42 is covered by rotatable front hub 48 of the fan section 14 (sometimes also referred to as a "spinner"). The front hub 48 aerodynamically contoured to promote an airflow through the plurality of fan blades 40. The fan blades 40 and disk 42 are together rotatable about the longitudinal centerline 12 by LP shaft 36.

Referring still to the exemplary embodiment of FIG. 1, the exemplary fan section 14 includes an annular fan casing or outer nacelle 50 that circumferentially surrounds the fan 38 and/or at least a portion of the turbomachine 16. The nacelle 50 is supported relative to the turbomachine 16 by a plurality of circumferentially-spaced outlet guide vanes 52. Additionally, a downstream section 54 of the nacelle 50 extends over an outer portion of the turbomachine16 so as to define a bypass airflow passage 56 therebetween.

During operation of the turbofan engine 10, a volume of air 58 enters the gas turbine engine 10 through an associated inlet 60 of the nacelle 50 and/or fan section 14. As the volume of air 58 passes across the fan blades 40, a first portion of the air 58 as indicated by arrow 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the low pressure (LP) compressor 22 and the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary turbofan engine 10 depicted in FIG. 1 is by way of example only, and that in other exemplary embodiments, the turbofan engine 10 may have any other suitable configuration. For example, in other exemplary embodiments, the turbofan engine 10 may be configured as a geared turbofan engine (i.e., including a reduction gearbox); may not include variable-pitch fan blades; may include any other suitable number of spools, compressors, or turbines; etc. Additionally, the turbofan engine 10 may instead be configured as any other suitable aeronautical gas turbine engine, such as a turboshaft engine, turboprop engine, turbojet engine, etc. Additionally, still, the turbofan engine 10 may instead be configured as an aeroderivative gas turbine engine (e.g., for nautical applications), an industrial gas turbine engine, or as any other suitable gas turbine engine.

As is depicted, the exemplary turbofan engine 10 further includes an accessory gearbox 45 attached to the gas turbine engine and mechanically coupled to a spool of the gas turbine engine. The accessory gearbox 45 may be mounted outside the flowpaths of the gas turbine engine 10, e.g. coupled to the outer casing of the HP compressor 24, or to the nacelle 50 or any other stationary structure of the gas turbine engine 10. The accessory gearbox 45 may provide power to one or more suitable accessory systems of the gas turbine engine 10 during at least certain operations.

More specifically, the accessory gearbox 45 may be attached to the turbomachine16 of the turbofan engine 10, and is mechanically coupled to the LP spool 36 of the turbofan engine 10 through a transfer gearbox 46 and transfer shaft 47. The transfer shaft 47 may extend through an outlet guide vane 52. The transfer shaft 47 may be drivingly coupled to the LP shaft 36 and the transfer gearbox 46, such that the LP spool 36 is rotatable with the transfer shaft 47 (e.g., the transfer gearbox 46 and transfer shaft 47 may rotate the LP spool 36). An electric machine 84 (i.e., a starter motor/generator) may be coupled to the accessory gearbox 45 for, e.g., starting and rotating the turbofan engine 10 and/or generating electrical power once the turbofan engine 10 is running.

In exemplary embodiments, the gas turbine engine 10 may include a lubrication system 100 fluidly connected to the accessory gearbox 45 and the transfer gearbox 46 (as indicated in FIG. 1 by the arrows connecting the lubrication system 100, the accessory gearbox 45, and the transfer gearbox 46). The lubrication system 100 may provide lubricant (e.g., oil) to the accessory gearbox 45 and the transfer gearbox 46 during operation of the gas turbine engine 10.

Moreover, it will be appreciated that after prolonged use of the turbofan engine 10 of FIG. 1, deposits, foreign particles, and other sediments may become attached to or form on certain of the components within the core air flowpath 37 of the turbofan engine 10. Accordingly, it may be beneficial at certain intervals to wash the turbofan engine 10 to remove such deposits, foreign particles, and other sediments. As such, when the gas turbine engine 10 is shut off, a wash system 80 may be utilized and configured for washing, rinsing, or otherwise cleaning the gas turbine engine 10. The wash system 80 may be housed at least in part on or within a modular and movable wash cart, which provides mobility of the wash system 80 and facilitates quick and easy cleaning of the gas turbine engine 10. The wash system 80 may include one or more wash line(s) 82, which may expel cleaning fluid into one or more sections and/or onto one or more components of the gas turbine engine 10 during shut down. For example, as shown in FIG. 1, at least one wash line 82 may provide cleaning fluid onto the fan blades 40; at least one wash line 82 may provide cleaning fluid into the annular inlet 20 of the core flowpath 37; at least one wash line 82 may provide cleaning fluid into (e.g., directly into) the HP compressor 24 (e.g., via one or more borescope holes); and at least one wash line 82 may provide cleaning fluid into (e.g., directly into) the combustion section 26 (e.g., via one or more borescope holes).

For all of the various components of the gas turbine engine 10 to be washed by the washing system 80 during shut down, the gas turbine engine 10 may be rotated by the electric machine 84 while the wash line(s) 82 pump cleaning fluid (e.g., heated detergent) into the engine. The electric machine 84 may be drivingly couplable with the accessory gearbox 45 to rotate the gas turbine engine 10 as desired during cleaning. The electric machine 84 may be capable of driving the accessory gearbox 45, the transfer gearbox 46, the transfer shaft 47, LP spool 36, and/or the HP spool 34. For example, a driving shaft 86 of the electric machine 84 may be couplable with the accessory gearbox 45.

In other embodiments, instead of an electric machine, a hybrid/electric motor such as a hybrid pneumatic electric starter or a hydraulic machine may be couplable with the accessory gearbox. In other embodiments, the gas turbine engine 10 may be rotated without the use of an electric machine during the wash event. For example, an air blower or suction pump may be utilized for driving the gas turbine engine 10. As a result, the gearboxes 45, 46 may also be driven.

As will be appreciated, because the gas turbine engine 10 is offline during cleaning (e.g., foam wash), the lubrication system 100 may not actively circulate lubrication to the accessory gearbox 45 and the transfer gearbox 46 as in traditional operation. For example, during normal operation, one or more supply pumps and one or more return pumps, which are drivingly connected to the accessory gearbox 45 (and/or the transfer gearbox 46), may circulate lubricant throughout the lubrication system 100 that is fluidly connected to the gearboxes 45, 46 (as indicated by arrows in FIG. 1). However, during the wash event, the supply pumps and/or return pumps may be operated at a slower speed than traditional operation, such that lubricant does not circulate at the same rate or in the same amount as it would during normal operation to the accessory gearbox 45 and/or the transfer gearbox 46. That is, because the gearboxes are driven at a lower speed during the wash event (which can last several hours) to drive the shaft(s) of the gas turbine engine 10 at a slow speed, thus driving the oil supply/return pumps at a slow speed, wear or gear scuffing can result in the gearboxes due to insufficient lubricant being provided. However, because the accessory gearbox 45 and the transfer gearbox 46 are still driven by the electric machine 84 in order to turn the gas turbine engine during cleaning, this can result in gear scuffing and wear of the various components (e.g., gears, bevel gears, etc.) in the accessory gearbox 45 and/or the transfer gearbox 46.

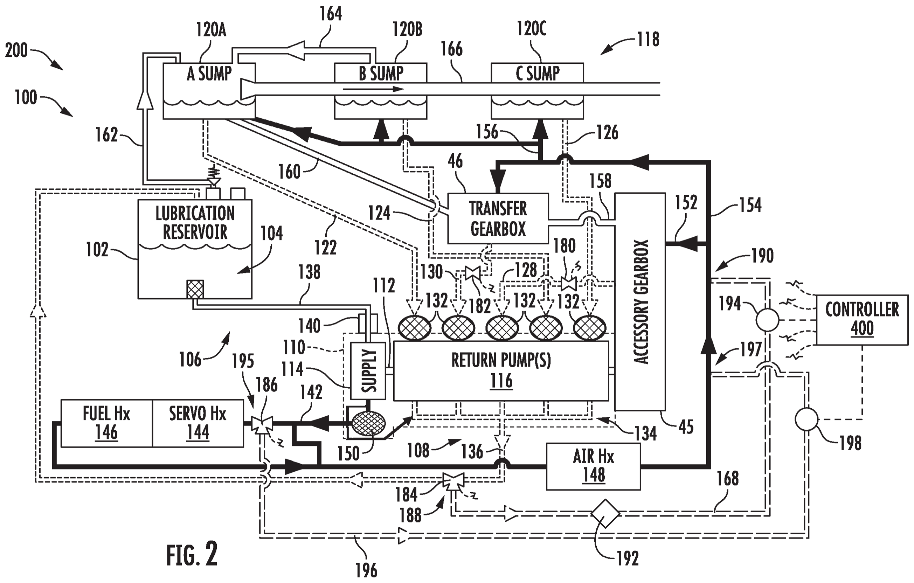

Referring now to FIG. 2, a schematic diagram of a system 200 for reducing or preventing wear during a wash cycle of a gas turbine engine is provided. The system includes a lubrication system 100 that provides lubricant to the accessory gearbox 45 and/or the transfer gearbox 46 during washing of a gas turbine engine. The lubrication system 100 advantageously provides an improved structure that provides and/or circulates sufficient lubricant to the accessory gearbox 45 and/or the transfer gearbox 46 during the washing of the gas turbine engine (e.g., via the wash system 80 described above with reference to FIG. 1), thereby preventing or reducing scuffing and/or wear of the accessory gearbox 45 and/or the transfer gearbox 46.

As shown, the system 200 includes the accessory gearbox 45 and the transfer gearbox 46, which may be drivingly coupled to the accessory gearbox 45. For example, the transfer gearbox 46 may be drivingly coupled to the accessory gearbox 45 (as shown and described above with reference to FIG. 1). The lubrication system 100 is fluidly coupled to both the accessory gearbox 45 and the transfer gearbox 46, in order to provide lubricant to the accessory gearbox 45 and the transfer gearbox 46 during operation of the gas turbine engine and/or during a wash event of the gas turbine engine.

The lubrication system 100 may include a lubricant reservoir 102, which may be a tank or container that holds and supplies lubricant 104 (e.g., oil) for circulation through the lubrication system 100, the accessory gearbox 45, and the transfer gearbox 46. Additionally, the lubrication system 100 includes a supply circuit 106 and a return circuit 108, which each include one or more fluid carrying conduits that supply and return lubricant 104 to the various components in the lubrication system 100, the accessory gearbox 45, and the transfer gearbox 46. Specifically, the supply circuit 106 may supply and provide lubricant 104 from the lubricant reservoir 102 to the accessory gearbox 45 and the transfer gearbox 46. The return circuit 108 may return lubricant 104 from the accessory gearbox 45 and the transfer gearbox 46 to the lubricant reservoir 102.

In many embodiments, the lubrication system 100 may include a lube and scavenge system 110 fluidly connected to the supply circuit 106 and the return circuit 108. The lube and scavenge system 110 may include a pump shaft 112 drivingly connected to the accessory gearbox 45, such that rotation of the pump shaft 112 rotates the components (e.g., gears and/or accessories) connected to the accessory gearbox 45, thereby also rotating the components of the transfer gearbox 46 via the transfer shaft 47, thereby also rotating the one or more shafts of a gas turbine engine (which is connected to the transfer gearbox 46 as shown and described above with reference to FIG. 1).

The lube and scavenge system 110 may further include a supply pump 114 and one or more return pump(s) 116. The supply pump 114 is fluidly coupled to the supply circuit 106 and drivingly coupled to the pump shaft 112. The supply pump 114 may motivate lubricant 104 to circulate through the lubrication system 100 (specifically through the supply circuit 106). The one or more return pump(s) 116 may each be fluidly coupled to the return circuit 108 and drivingly coupled to the pump shaft 112. The one or more return pump(s) 116 may motivate lubricant 104 to circulate through the lubrication system 100 (specifically through the return circuit 108). The pump shaft 112 may drivingly couple both the supply pump 114 and the one or more return pump(s) 116.

In various embodiments, the lubrication system 100 may further include a sump system 118 having one or more sumps 120A, 120B, 120C fluidly connected to at least one of the supply circuit 106 and the return circuit 108. The sump system 118 can be a bearing sump region for lubricating engine bearings, in one non-limiting example. A first sump 120A, a second sump 120B, and a third sump 120C can be included in the sump system 118. Each sump 120A, 120B, 120C may be a reservoir or container that collects used lubricant 104 (e.g., used oil) from one or more engine bearings of a gas turbine engine (such as the gas turbine engine 10 described above with reference to FIG. 1). In other words, each sump 120A, 120B, 120C may be fluidly connected to an engine bearing of a gas turbine engine. While three sumps are illustrated, any number of sumps is contemplated. In one example, a valve can control provision of lubricant 104 to any one of the sumps.

The return circuit 108 may include one or more return lines 122, 124, 126, 128, 130 extending to the lube and scavenge system 110 and a main return line 136 extending from the lube and scavenge system 110 to the lubrication reservoir 102. Specifically, a first sump return line 122 may extend from the first sump 120A to the lube and scavenge system 110 (e.g., to the one or more return pump(s) 116 of the lube and scavenge system 110) to provide used lubricant from the first sump 120A to the lube and scavenge system 110. A second sump return line 124 may extend from the second sump 120B to the lube and scavenge system 110 (e.g., to the one or more return pump(s) 116 of the lube and scavenge system 110) to provide used lubricant from the second sump 120B to the lube and scavenge system 110. A third sump return line 126 may extend from the third sump 120C to the lube and scavenge system 110 (e.g., to the one or more return pump(s) 116 of the lube and scavenge system 110) to provide used lubricant from the third sump 120C to the lube and scavenge system 110.

Additionally, an accessory gearbox return line 128 may extend from the accessory gearbox 45 to the lube and scavenge system 110 (e.g., to the one or more return pump(s) 116 of the lube and scavenge system 110) to provide used lubricant from the accessory gearbox 45 to the lube and scavenge system 110. Similarly, a transfer gearbox return line 130 may extend from the transfer gearbox 46 to the lube and scavenge system 110 (e.g., to the one or more return pump(s) 116 of the lube and scavenge system 110) to provide used lubricant from the transfer gearbox 46 to the lube and scavenge system 110.

In various embodiments, an inlet filter 132 may be disposed in fluid communication on each of the one or more return lines 122, 124, 126, 128, 130 immediately upstream of the one or more return pump(s) 116. The inlet filters 132 may filter the used lubricant within each of the one or more return lines 122, 124, 126, 128, 130 prior to entrance into the one or more return pump(s) 116. For example, the inlet filters 132 may remove contaminants and/or particles from the used lubricant flowing through the one or more return lines 122, 124, 126, 128, 130 that could otherwise cause damage to the components of the system 100.

In exemplary embodiments, the lube and scavenge system 110 may include a scavenge manifold 134 fluidly coupled, and extending from, the one or more return pump(s) 116. The scavenge manifold 134 may collect all the lubricant from each pump of the one or more return pump(s) 116. The return circuit 108 may further include a main return line 136 extending from the lube and scavenge system 110 to the oil reservoir 102. Specifically, the main return line 136 may extend from the scavenge manifold 134 to the lubricant reservoir 102 (e.g., to a top of the lubricant reservoir).

The supply circuit 106 may provide clean (e.g., filtered) lubricant to the lube and scavenge system 110, the accessory gearbox 45, and the transfer gearbox 46. The supply circuit 106 may include an inlet supply line 138 fluidly coupling the lubrication reservoir 102 and the lube and scavenge system 110. Specifically, the inlet supply line 138 may extend from the lubrication reservoir 102 to the lube and scavenge system 110. Specifically, the inlet supply line may extend from the lubrication reservoir 102 to the supply pump 114 of the lube and scavenge system 110.

The supply circuit 106 may further include an outlet supply line 142 extending from the lube and scavenge system 110 to the accessory gearbox 45 and the transfer gearbox 46. Specifically, the outlet supply line 142 may extend from the supply pump 114 to the accessory gearbox 45 and the transfer gearbox 46 (as shown by the thick dark arrow lines in FIG. 2).

In many embodiments, the system 100 may further include one or more heat exchangers 144, 146, 148 disposed in thermal communication on the outlet supply line 142. Specifically, the one or more heat exchangers may include a servo heat exchanger 144, a fuel heat exchanger 146, and an air heat exchanger 148. During normal operation of a gas turbine engine, the servo heat exchanger 144 may transfer heat between the lubricant 104 within the outlet supply line 142 and one or more servo motors associated with the system 100 and/or the gas turbine engine (such as the gas turbine engine 10 described above with reference to FIG. 1). Additionally, during normal operation of a gas turbine engine, the fuel heat exchanger 146 may transfer heat between the lubricant 104 within the outlet supply line 142 and fuel supplied to the gas turbine engine, e.g., from a fuel supply system coupled to a combustion section of the gas turbine engine (such as the gas turbine engine 10 described above with reference to FIG. 1). Further, during normal operation of a gas turbine engine, the air heat exchanger 148 may transfer heat between the lubricant 104 within the outlet supply line 142 and air supplied to the gas turbine engine, e.g., air from the fan section and/or the compressor section of the gas turbine engine (such as the gas turbine engine 10 described above with reference to FIG. 1).

In some embodiments, a supply-side filter 150 may be disposed in fluid communication on the outlet supply line 142. The supply side filter 150 may be disposed immediately downstream of the supply pump 114. The supply-side filter 150 may remove contaminants and/or particles from the lubricant being supplied to the accessory gearbox 45 and/or the transfer gearbox 46 via the outlet supply line. As illustrated, a filter bypass line may be included on the outlet supply line 142, which allows for selective bypass of the supply-side filter 150.

The outlet supply line 142 may include several portions extending between various components fluidly and/or thermally connected to the outlet supply line 142. For example, a first portion of the outlet supply line 142 may extend from the supply pump 114 to the supply-side filter 150. A second portion of the outlet supply line 142 may extend from the supply-side filter 150 to the servo heat exchanger 144 and the fuel heat exchanger 146. A third portion of the outlet supply line 142 may extend from the servo heat exchanger 144 and the fuel heat exchanger 146 to the air heat exchanger 148. A fourth portion of the outlet supply line 142 may extend from the air heat exchanger 148 to the accessory gearbox 45 and the transfer gearbox 46. In many embodiments, outlet supply line 142 may include a first branch 152 extending to the accessory gearbox 45 and a second branch 154 extending to the transfer gearbox 46. Additionally, the outlet supply line 142 may include an overflow branch 156 that connects to each sump 120A, 120B, 120C in the sump system 118 to prevent lubricant overfill of the accessory gearbox 45 and/or the transfer gearbox 46. The overflow branch 156 may extend from the second branch 154 to each of the sumps 120A, 120B, 120C.

In various embodiments, an anti-leak valve (or non-return valve) 140 may be fluidly connected to the lube and scavenge system 110 and disposed on the inlet supply line 138. The anti-leak valve 140 may be a mechanically loaded one-way valve that prevents lubricant 104 from the lubrication reservoir 102 from draining into the lube and scavenge system 110, the accessory gearbox 45, and/or the transfer gearbox 46.

The lubrication system 100 may further include a vent circuit for venting gases (e.g., air and/or other gases) from the lubricant system 100 (e.g., to the atmosphere). The vent circuit may include an accessory duct 158 extending from the accessory gearbox 45 to the transfer gearbox 46 for venting excess gases from the accessory gearbox 45. A transfer duct 160 may extend from the transfer gearbox to the sump system 118 (e.g., to the first sump 120A in the sump system 118) for venting or removing excess gases from the transfer gearbox 46. A reservoir vent 162 may extend from the lubrication reservoir 102 to the first sump 120A for venting or removing excess gases from the lubrication reservoir 102. An overflow duct 164 may extend from the second sump 120B to the first sump 120A for venting excess gases from the second sump 120B to the first sump 120A. A main outlet 166 duct may extend from the first sump 120A, through the second sump 120B and the third sump 120C, to an outlet, which may exhaust the gases (e.g., to the atmosphere).

As shown in FIG. 2, the lubrication system 100 may include one or more valves 180, 182, 184, and 186. The one or more valves may include one or more two-way valves 180 and 182, which may be selectively actuated between an open position and a closed position. Specifically, a first valve 180 may be fluidly connected to the accessory gearbox return line 128 and a second valve 182 connected to the transfer gearbox return line 130.

In an open position, fluid traveling through the line to which the two-way valves 180 and/or 182 is attached may be unrestricted. By contrast, in a closed position, fluid traveling through the line to which the valve 180 and/or 182 is attached may be restricted. Each of the two-way valves 180 and 182 may also be selectively actuated to a partially closed (or partially open) position, which may allow the valves 180 and/or 182 to control a flow rate of the fluid traveling through the line to which the valves 180 and/or 182 are attached. Additionally, the one or more valves may include one or more three-way valves 184, 186. The three-way valves 184, 186 may each be actuatable between a first position, a second position, and a fully-closed position. In the first position, the three-way valve 184, 186 may permit fluid to flow through the line to which the three-way valve is attached while restricting fluid to flow into another line to which the three-way valve 184, 186 is attached. In the second position, the three-way valve 184, 186 may divert fluid into another line to which the three-way valve is attached while restricting fluid to flow through the line to which the three-way valve 184, 186 is attached. In the fully-closed position, the three way valve 184, 186 may fully restrict fluid to pass beyond the three way valve 184, 186.

In many embodiments, a controller 400 may be operably connected to, and in communication with, the valves 180, 182, 184, and 186. The controller 400 may be configured to send control signals to the valve(s) 180, 182, 184, and 186 to adjust their operation. For example, the controller 400 may selectively actuate the two-way valves 180 and 182 between the open position and the closed position. Additionally, the controller 400 may selectively actuate the three-way valve between the first position, the second position, and the fully-closed position.

In exemplary embodiments, the lubrication system 100 may further include a wash bypass line 168 that extends from the return circuit 108 to the supply circuit 106 to fluidly couple the return circuit 108 and the supply circuit 106. The wash bypass line 168 may extend from the return circuit 108 to the outlet supply line 142 upstream of the accessory gearbox 45 and the transfer gearbox 46. Additionally, as shown, the wash bypass line 168 may extend from the main return line 136 to the supply circuit 106 upstream of the accessory gearbox 45 and the transfer gearbox 46.

Specifically, in some embodiments, the wash bypass line 168 may extend from an inlet 188 at the main return line 136 immediately downstream of the scavenge manifold 134 of the lube and scavenge system 110 to an outlet 190 at the outlet line 142 of the supply circuit 106 upstream of the first branch 152 and the second branch 154. A three-way valve 184 may be positioned at the inlet 188 and in fluid communication with the main return line 136 and the wash bypass line 168. The three-way valve 184 may be actuatable (e.g., by the controller 400) between a first position that permits fluid to flow through the main return line 136 while preventing fluid to flow into the wash bypass line 168, a second position that permits or diverts fluid from the main return line 136 into the wash bypass line 168, and a fully-closed position that prevents fluid from flowing beyond the three-way valve 184.

In some embodiments, a bypass filter 192 may be disposed in fluid communication on the wash bypass line 168. The bypass filter 192 may be disposed immediately downstream of the inlet 188 of the wash bypass line 168. The bypass filter 192 may remove contaminants and/or particles from the lubricant being supplied to the accessory gearbox 45 and/or the transfer gearbox 46 via the wash bypass line 168.

Additionally, in some embodiments, a pressure level sensor 194 may be disposed in fluid communication on the wash bypass line 168. The pressure level sensor 194 may be in communication with the controller 400 and may provide data indicative of a pressure level (or oil level) within the accessory gearbox 45 and/or the transfer gearbox 46 to the controller 400 to prevent overfilling of the accessory gearbox 45 and/or the transfer gearbox 46. For example, when the controller 400 determines that the data indicative of a pressure level within the accessory gearbox 45 and/or the transfer gearbox 46 exceeds a predetermined threshold (e.g., indicating that the gearboxes 45, 46 are overfilled), the controller may actuate the three-way valve 184 to a first position prevent additional lubricant from flowing into the gearboxes 45, 46. Additionally, or alternatively, in response to determining that the data indicative of a pressure level within the accessory gearbox 45 and/or the transfer gearbox 46 exceeds a predetermined threshold (e.g., the gearboxes 45, 46 are overfilled), the controller may actuate one or both of the two-way valves 180, 182 to an open position thereby allowing for lubricant to egress from the gearboxes 45, 46.

The wash bypass line 168 may advantageously be utilized during a wash event of a gas turbine engine (such as the gas turbine engine 10 described above with reference to FIG. 1) to reduce or prevent wear and/or scuffing of the accessory gearbox 45 and the transfer gearbox 46. For example, during a wash event of the gas turbine engine, the accessory gearbox 45 and the transfer gearbox 46 may be driven with an electric machine 84 (FIG. 1), thereby rotating one or more shafts of the gas turbine engine (e.g., the LP shaft and/or the HP shaft). During the wash event, the first valve 180 and/or the second valve 182 may be actuated (e.g., by the controller 400) to a closed position, thereby preventing egress of lubricant from the accessory gearbox 45 and/or the transfer gearbox 46. Additionally, the three-way valve 184 may be actuated to a second position which diverts fluid from the main return line 136 into the wash bypass line 168, thereby providing additional lubricant to the accessory gearbox 45 and the transfer gearbox 46. Upon completion of the wash event, the first valve 180 and/or the second valve 182 may be actuated (e.g., by the controller 400) to an open position, thereby allowing for egress of lubricant from the accessory gearbox 45 and/or the transfer gearbox 46. Additionally, upon completion of the wash event, the three-way valve 184 may be actuated back to the first position that prevents lubricant from flowing into the wash bypass line 168 and the accessory gearbox 45 and transfer gearbox 46.

The wash bypass line 168 may define a diameter that meters the flow of lubricant 104 into the gearboxes 45, 46, such that only a desired quantity and flow rate of lubricant 104 is provided to the gearboxes 45, 46. For example, the diameter of the wash bypass line 168 may be sized to correspond with the speed of the pump(s) 114, 116 during a wash event, in order to provide sufficient lubricant 104 to the gearboxes 45, 46 during the wash event. For example, the pump(s) 114, 116 operate at a slower speed during the wash event, and the diameter of the wash bypass line 168 may be sized to accommodate for the slower speed of the pump(s) 114, 116 during the wash event by providing sufficient lubricant to the gearboxes 45, 46.

Additionally, or alternatively, the lubrication system 100 may include a supply-side bypass line 196 extending from the outlet supply line 142 upstream of the one or more heat exchangers 144, 146, 148 to the outlet supply line 142 downstream of the one or more heat exchangers. Specifically, the supply-side bypass line 196 may extend from an inlet 195 at the outlet supply line 142 downstream of the inlet filter 150 and upstream of the heat exchangers 144, 146 to an outlet 197 at the outlet supply line 142 downstream of the air heat exchanger 148 and upstream of the accessory gearbox 45 and the transfer gearbox 46, thereby bypassing the heat exchangers 144, 146, 148. A three-way valve 186 may be positioned at the inlet 195 and in fluid communication with the outlet supply line 142 and the supply-side bypass line 196. The three-way valve 186 may be actuatable (e.g., by the controller 400) between a first position that permits fluid to flow through outlet supply line 142 while preventing fluid to flow into the supply-side bypass line 196, a second position that permits or diverts fluid from the outlet supply line 142 into the supply-side bypass line 196, and a fully-closed position that prevents fluid from flowing beyond the three-way valve 186.

Additionally, in many embodiments, a pressure level sensor 198 may be disposed in fluid communication on the supply-side bypass line 196. The pressure level sensor 198 may be in communication with the controller 400 and may provide data indicative of a pressure level (or oil level) within the accessory gearbox 45 and/or the transfer gearbox 46 to the controller 400 to prevent overfilling of the accessory gearbox 45 and/or the transfer gearbox 46. For example, when the controller 400 determines that the data indicative of a pressure level within the accessory gearbox 45 and/or the transfer gearbox 46 exceeds a predetermined threshold (e.g., indicating that the gearboxes 45, 46 are overfilled or nearly overfilled), the controller may actuate the three-way valve 186 to a first position prevent additional lubricant from flowing into the gearboxes 45, 46. Additionally, or alternatively, in response to determining that the data indicative of a pressure level within the accessory gearbox 45 and/or the transfer gearbox 46 exceeds a predetermined threshold (e.g., the gearboxes 45, 46 are overfilled or nearly overfilled), the controller 400 may actuate one or both of the two-way valves 180, 182 to an open position thereby allowing for lubricant to egress from the gearboxes 45, 46.

The supply-side bypass line 196 may advantageously be utilized during a wash event of a gas turbine engine (such as the gas turbine engine 10 described above with reference to FIG. 1) to reduce or prevent wear and/or scuffing of the accessory gearbox 45 and the transfer gearbox 46. For example, during a wash event of the gas turbine engine, the accessory gearbox 45 and the transfer gearbox 46 may be driven with an electric machine 84, thereby rotating one or more shafts of the gas turbine engine (e.g., the LP shaft and/or the HP shaft). During the wash event, the first valve 180 and/or the second valve 182 may be actuated (e.g., by the controller 400) to a closed position, thereby preventing egress of lubricant from the accessory gearbox 45 and/or the transfer gearbox 46. Additionally, the three-way valve 186 may be actuated to a second position diverts fluid from outlet supply line 142 into the supply-side bypass line 196, thereby bypassing the heat exchangers 144, 146, 148 and providing additional lubricant to the accessory gearbox 45 and the transfer gearbox 46. Upon completion of the wash event, the first valve 180 and/or the second valve 182 may be actuated (e.g., by the controller 400) to an open position, thereby allowing for egress of lubricant from the accessory gearbox 45 and/or the transfer gearbox 46. Additionally, upon completion of the wash even, the three-way valve 186 may be actuated back to the first position that prevents lubricant from flowing into supply-side bypass line 196 and permits fluid to flow through the outlet supply line 142.

The supply-side bypass line 196 may define a diameter that meters the flow of lubricant 104 into the gearboxes 45, 46, such that only a desired quantity and flow rate of lubricant 104 is provided to the gearboxes 45, 46. For example, the diameter of the supply-side bypass line 196 may be sized to correspond with the speed of the pump(s) 114, 116 during a wash event, in order to provide sufficient lubricant 104 to the gearboxes 45, 46 during the wash event. For example, the pump(s) 114, 116 operate at a slower speed during the wash event, and the diameter of the supply-side bypass line 196 may be sized to accommodate for the slower speed of the pump(s) 114, 116 during the wash event by providing sufficient lubricant to the gearboxes 45, 46.

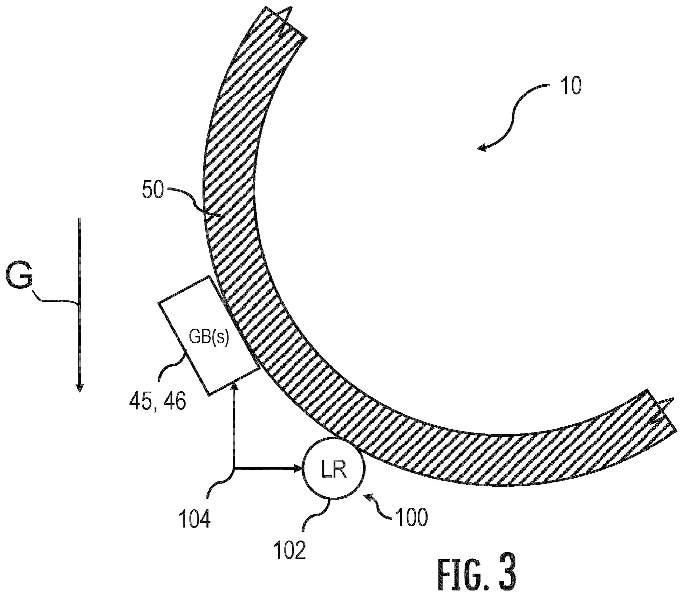

Referring now to FIG. 3, a cross-sectional view of a portion of a nacelle 50 of a gas turbine engine 10 is illustrated in accordance with exemplary aspects of the present disclosure. As shown, one or more gearboxes (such as the accessory gearbox 45 and/or the transfer gearbox 46) may be mounted on an exterior of the nacelle 50. The gearboxes 45, 46 may be fluidly connected to a lubrication reservoir 102 of a lubrication system 100 (as described in detail above with reference to FIG. 2). That is, the gearboxes 45, 46 may be fluidly connected to the lubrication reservoir 102, such that a lubricant 104 may be provided between the lubrication reservoir 102 and the gearboxes 45, 46. Additionally, as shown, the lubrication reservoir 102 may be mounted to the nacelle 50 below the gearboxes 45, 46 with respect to a direction of gravity G. Stated otherwise, the gearboxes 45, 46 may be mounted to the nacelle 50 above the lubrication reservoir 102 with respect to the direction of gravity G. In this manner, when the lubrication system 100 is offline, the gas turbine engine 10 is offline, and/or the wash event has ended, lubricant 104 flows (due to gravity) out of the gearboxes 45, 46 and back into the lubrication reservoir 102.

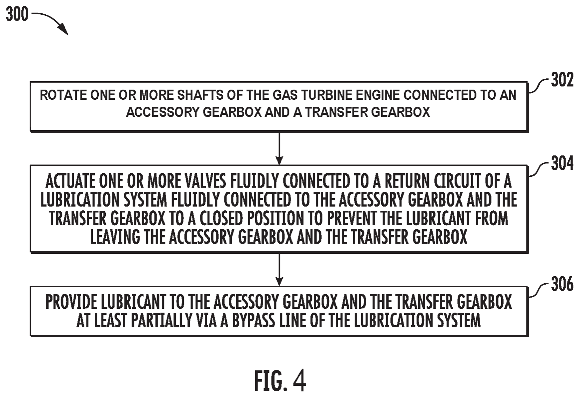

Referring now to FIG. 4, a flow diagram of a method 300 for preventing or reducing (e.g., minimizing) wear (e.g., in one or more gearboxes) during a wash of a gas turbine engine is illustrated in accordance with embodiments of the present subject matter. In general, the method 300 will be described herein with reference to the gas turbine engine 10, the wash system 80, the system 200, and the lubrication system 100 described above with reference to FIGS. 1 and 2. However, it will be appreciated by those of ordinary skill in the art that the disclosed method 300 may generally be utilized with any other suitable system configuration. In addition, although FIG. 4 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown, the method 300 may include, at (302), rotating one or more shafts of the gas turbine engine connected to an accessory gearbox and a transfer gearbox. For example, during the wash of the gas turbine engine, the accessory gearbox and the transfer gearbox may be driven with an electric machine, thereby rotating one or more shafts of the gas turbine engine (e.g., the LP shaft and/or the HP shaft). Alternatively, or additionally, the gas turbine engine (e.g., the one or more shafts of the gas turbine engine) may be driven by an alternative means during the wash, such as a blower system and/or suction system, thereby driving the accessory gearbox and/or the transfer gearbox. Further, an electric starter, hybrid/electric starter, hybrid pneumatic/electric starter, or other means may be utilized for rotating the one or more shafts of the gas turbine engine during the wash.

In many implementations, the method 300 may further include, at (304), actuating one or more valves fluidly connected to a return circuit of a lubrication system fluidly connected to the accessory gearbox and the transfer gearbox to a closed position to prevent the lubricant from leaving the accessory gearbox and the transfer gearbox. For example, referring back to FIG. 2, during the wash event, the first valve 180 and/or the second valve 182 may be actuated (e.g., by the controller 400) to a closed position, thereby preventing egress of lubricant from the accessory gearbox 45 and/or the transfer gearbox 46.

As shown in FIG. 4, the method 300 may further include, at (306) providing lubricant to the accessory gearbox and the transfer gearbox at least partially via a bypass line of the lubrication system. For example, with reference to FIG. 2, the bypass line may be either or both of the wash bypass line 168 and/or the supply-side bypass line 196.

In some implementations, the method may include cleaning the gas turbine engine with a wash system during the wash. The wash system may include one or more wash line(s), which may expel cleaning fluid onto one or more components of the gas turbine engine while the shaft(s) of the gas turbine engine are rotated (e.g., by the electric machine or by another means such as a blower system, suction system, an electric starter, hybrid/electric starter, hybrid pneumatic/electric starter). In such implementations, after cleaning the gas turbine engine with the wash system (e.g., at the end of the wash event), the method may include actuating the one or more valves to an open position to permit the lubricant to egress from the accessory gearbox and the transfer gearbox (e.g., back into a lubricant reservoir).

In various implementations, the method may include receiving, with the controller, data indicative of a pressure level or oil level within the gearboxes from a pressure level sensor in fluid communication with the lubrication system. In such implementations, the method may further include determining, after or during a predetermined period, that insufficient lubricant has been provided to the accessory gearbox and the transfer gearbox based on the data indicative of pressure level or oil level within the gearboxes. In response, the method may include manually providing additional lubricant to the accessory gearbox and/or the transfer gearbox. Additionally, the method may include ceasing rotating the accessory gearbox and the transfer gearbox to protect the gearboxes from scuffing and/or gear wear. That is, when the controller (e.g., during a wash event) determines that insufficient lubricant is present in the gearbox(es), a notification may be provided to a user (e.g., via a user interface), and additional oil may be directly (e.g., manually) provided to the gearbox(es) during the wash event to protect the gearboxes from scuffing and/or gear wear.

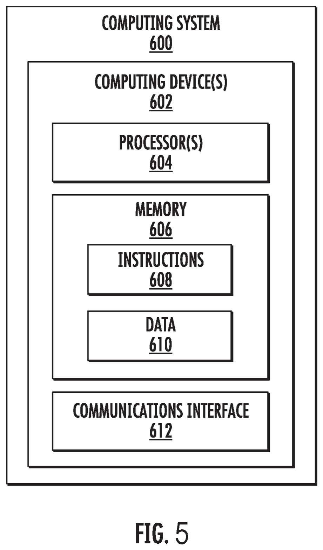

FIG. 5 provides a block diagram of an example computing system 600. The computing system 600 can be used to implement the aspects disclosed herein. The computing system 600 can include one or more computing device(s) 602. The controller 400 described above with reference to FIG. 2 may be constructed and may operate in a same or similar manner as one of the computing devices 602, for example.

As shown in FIG. 5, the one or more computing device(s) 602 can each include one or more processor(s) 604 and one or more memory device(s) 606. The one or more processor(s) 604 can include any suitable processing device, such as a microprocessor, microcontroller, integrated circuit, logic device, or other suitable processing device. The one or more memory device(s) 606 can include one or more computer-readable media, including, but not limited to, non-transitory computer-readable medium or media, RAM, ROM, hard drives, flash drives, and other memory devices, such as one or more buffer devices.

The one or more memory device(s) 606 can store information accessible by the one or more processor(s) 604, including computer-readable or computer-executable instructions 608 that can be executed by the one or more processor(s) 604. The instructions 608 can be any set of instructions or control logic that when executed by the one or more processor(s) 604, cause the one or more processor(s) 604 to perform operations. The instructions 608 can be software written in any suitable programming language or can be implemented in hardware. The computing system 600 may implement the controller 400 described above with reference to FIG. 2, such that the instructions 608 may be executed to implement the method 300 or one or more parts of the method 300 described above with reference to FIG. 4. For example, the instructions 608 may be executed by the one or more processor(s) 604 of the computing system 600 for to cause the system 200 to perform one or more operations, including but not limited to: rotating one or more shafts of the gas turbine engine connected to an accessory gearbox and a transfer gearbox; actuating one or more valves fluidly connected to a return circuit of a lubrication system fluidly connected to the accessory gearbox and the transfer gearbox to a closed position to prevent the lubricant from leaving the accessory gearbox and the transfer gearbox; and providing lubricant to the accessory gearbox and the transfer gearbox at least partially via a bypass line of the lubrication system

The memory device(s) 606 can further store data 610 that can be accessed by the processor(s) 604. For example, the data 610 can include sensor data (such as engine parameters), model data, logic data, etc., as described herein. The data 610 can include one or more table(s), function(s), algorithm(s), model(s), equation(s), etc. according to example embodiments of the present disclosure.

The one or more computing device(s) 602 can also include a communication interface 612 used to communicate, for example, with the other components of the gas turbine engine, such as the valves and/or pressure level sensors. The communication interface 612 can include any suitable components for interfacing with one or more network(s), including for example, transmitters, receivers, ports, controllers, antennas, or other suitable components.

Further aspects are provided by the subject matter of the following clauses:

A system for reducing wear during a wash of a gas turbine engine, the system comprising: an accessory gearbox; a transfer gearbox drivingly coupled to the accessory gearbox; and a lubrication system fluidly coupled to the accessory gearbox and the transfer gearbox, the lubrication system comprising: a lubricant reservoir; a supply circuit to supply lubricant from the lubricant reservoir to the accessory gearbox and the transfer gearbox; a return circuit to return the lubricant from the accessory gearbox and the transfer gearbox to the lubricant reservoir; and a wash bypass line extending from the return circuit to the supply circuit.

The system as in any preceding clause, wherein the lubrication system comprises one or more valves fluidly coupled to the return circuit, the one or more valves selectively actuatable between an open position and a closed position.

The system as in any preceding clause, wherein the lubrication system further includes a lube and scavenge system fluidly connected to the supply circuit and the return circuit.

The system as in any preceding clause, wherein the return circuit comprises: an accessory gearbox return line extending from the accessory gearbox to the lube and scavenge system; a transfer gearbox return line extending from the transfer gearbox to the lube and scavenge system; and a main return line extending from the lube and scavenge system to the lubricant reservoir.

The system as in any preceding clause, wherein the wash bypass line extends from the main return line to the supply circuit upstream of the accessory gearbox and the transfer gearbox.

The system as in any preceding clause, wherein the supply circuit comprises: an inlet supply line extending from the lubrication reservoir to the lube and scavenge system; and an outlet supply line extending from the lube and scavenge system to the accessory gearbox and the transfer gearbox.

The system as in any preceding clause, wherein the wash bypass line extends from the return circuit to the outlet supply line upstream of the accessory gearbox and the transfer gearbox.

The system as in any preceding clause, further comprising one or more heat exchangers disposed in thermal communication on the outlet supply line.

The system as in any preceding clause, further comprising a supply-side bypass line extending from the outlet supply line upstream of the one or more heat exchangers to the outlet supply line downstream of the one or more heat exchangers.

The system as in any preceding clause, wherein the lube and scavenge system comprises: a pump shaft drivingly connected to the accessory gearbox; a supply pump fluidly coupled to the supply circuit and drivingly coupled to the pump shaft; and one or more return pumps fluidly coupled to the return circuit and drivingly coupled to the pump shaft.

The system as in any preceding clause, further comprising a sump system having one or more sumps fluidly connected to at least one of the supply circuit and the return circuit.

A system for reducing wear during a wash of a gas turbine engine, the system comprising: an accessory gearbox; a transfer gearbox drivingly coupled to the accessory gearbox; and a lubrication system fluidly coupled to the accessory gearbox and the transfer gearbox, the lubrication system comprising: a lubricant reservoir; a lube and scavenge system; a supply circuit having an inlet supply line extending from the lubrication reservoir to the lube and scavenge system and an outlet supply line extending from the lube and scavenge system to the accessory gearbox and the transfer gearbox; a return circuit to return the lubricant from the accessory gearbox and the transfer gearbox to the lubricant reservoir; one or more heat exchangers disposed in thermal communication on the outlet supply line; and a supply-side bypass line extending from the outlet supply line upstream of the one or more heat exchangers to the outlet supply line downstream of the one or more heat exchangers.

The system as in any preceding clause, further comprising a wash bypass line extending from the return circuit to the supply circuit.

The system as in any preceding clause, wherein the lubrication system comprises one or more valves fluidly coupled to the return circuit, the one or more valves selectively actuatable between an open position and a closed position.

The system as in any preceding clause, wherein the return circuit comprises: an accessory gearbox return line extending from the accessory gearbox to the lube and scavenge system; a transfer gearbox return line extending from the transfer gearbox to the lube and scavenge system; and a main return line extending from the lube and scavenge system to the lubricant reservoir.

The system as in any preceding clause, wherein the wash bypass line extends from the main return line to the supply circuit upstream of the accessory gearbox and the transfer gearbox.

The system as in any preceding clause, wherein the wash bypass line extends from the return circuit to the outlet supply line upstream of the accessory gearbox and the transfer gearbox.

The system as in any preceding clause, wherein the lube and scavenge system comprises: a pump shaft drivingly connected to the accessory gearbox; a supply pump fluidly coupled to the supply circuit and drivingly coupled to the pump shaft; and one or more return pumps fluidly coupled to the return circuit and drivingly coupled to the pump shaft.

A method for reducing wear during a wash of a gas turbine engine, the method comprising: rotating one or more shafts of the gas turbine engine connected to an accessory gearbox and a transfer gearbox; actuating one or more valves fluidly connected to a return circuit of a lubrication system fluidly connected to the accessory gearbox and the transfer gearbox to a closed position to prevent the lubricant from leaving the accessory gearbox and the transfer gearbox; and providing lubricant to the accessory gearbox and the transfer gearbox at least partially via a bypass line of the lubrication system.

A method as in any preceding clause, further comprising: cleaning the gas turbine engine with a wash system during the wash; and after cleaning the gas turbine engine with the wash system, actuating the one or more valves to an open position to permit the lubricant to egress from the accessory gearbox and the transfer gearbox into a lubricant reservoir.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system for reducing wear during a wash of a gas turbine engine (10), the system comprising:
an accessory gearbox (45);
a transfer gearbox (46) drivingly coupled to the accessory gearbox (45); and
a lubrication system (100) fluidly coupled to the accessory gearbox (45) and the transfer gearbox (46), the lubrication system (100) comprising:
a lubricant reservoir (102);
a supply circuit (106) for supplying lubricant (104) from the lubricant reservoir (102) to the accessory gearbox (45) and the transfer gearbox (46);
a return circuit (108) for returning the lubricant (104) from the accessory gearbox (45) and the transfer gearbox (46) to the lubricant reservoir (102); and
a wash bypass line (168) extending from the return circuit (108) to the supply circuit (106).

2. The system as in claim 1, wherein the lubrication system (100) comprises one or more valves fluidly coupled to the return circuit (108), the one or more valves selectively actuatable between an open position and a closed position.

3. The system as in claim 2, wherein the lubrication system (100) further includes a lube and scavenge system (110) fluidly connected to the supply circuit (106) and the return circuit (108).

4. The system as in claim 3, wherein the return circuit (108) comprises:
an accessory gearbox (45) return line extending from the accessory gearbox (45) to the lube and scavenge system (110);
a transfer gearbox (46) return line extending from the transfer gearbox (46) to the lube and scavenge system (110); and
a main return line (136) extending from the lube and scavenge system (110) to the lubricant reservoir (102).

5. The system as in claim 4, wherein the wash bypass line (168) extends from the main return line (136) to the supply circuit (106) upstream of the accessory gearbox (45) and the transfer gearbox (46).

6. The system as in any of claims 3 to 5, wherein the supply circuit (106) comprises:
an inlet supply line (138) extending from the lubrication reservoir to the lube and scavenge system (110); and
an outlet supply line (142) extending from the lube and scavenge system (110) to the accessory gearbox (45) and the transfer gearbox (46).

7. The system as in claim 6, wherein the wash bypass line (168) extends from the return circuit (108) to the outlet supply line (142) upstream of the accessory gearbox (45) and the transfer gearbox (46).

8. The system as in claim 6 or 7, further comprising one or more heat exchangers (144, 146, 148) disposed in thermal communication on the outlet supply line (142).

9. The system as in claim 8, further comprising a supply-side bypass line (192) extending from the outlet supply line (142) upstream of the one or more heat exchangers (144, 146, 148) to the outlet supply line (142) downstream of the one or more heat exchangers (144, 146, 148).

10. The system as in any of claims 3 to 9, wherein the lube and scavenge system (110) comprises:
a pump shaft (112) drivingly connected to the accessory gearbox (45);
a supply pump (114) fluidly coupled to the supply circuit (106) and drivingly coupled to the pump shaft (112); and
one or more return pumps fluidly coupled to the return circuit (108) and drivingly coupled to the pump shaft (112).

11. The system as in any of claims 1 to 10, further comprising a sump system (118) having one or more sumps (120A, 120B, 120C) fluidly connected to at least one of the supply circuit (106) and the return circuit (108).

12. A method for reducing wear during a wash of a gas turbine engine (10), the method comprising:
rotating one or more shafts of the gas turbine engine (10) connected to an accessory gearbox (45) and a transfer gearbox (46);
actuating one or more valves fluidly connected to a return circuit (108) of a lubrication system (100) fluidly connected to the accessory gearbox (45) and the transfer gearbox (46) to a closed position to prevent the lubricant from leaving the accessory gearbox (45) and the transfer gearbox (46); and
providing lubricant to the accessory gearbox (45) and the transfer gearbox (46) at least partially via a bypass line of the lubrication system (100).

13. A method as in claim 12, further comprising:
cleaning the gas turbine engine (10) with a wash system (80) during the wash; and
after cleaning the gas turbine engine (10) with the wash system (80), actuating the one or more valves to an open position to permit the lubricant to egress from the accessory gearbox (45) and the transfer gearbox (46) into a lubricant reservoir (102).
